# EUROPEAN PATENT APPLICATION

(11) **EP 4 467 776 A1**
(43) Date of publication of application: **27.11.2024**
(21) Application number: 24177954.5
(22) Date of filing: 24.05.2024
(51) Int. Cl.: F01D 25/12, F01D 25/18, F02C 7/06

(54) **SCOOP ASSEMBLY FOR ROTATIONAL EQUIPMENT**

(30) Priority: 26.05.2023 US 202318202407
(71) Applicant: RTX Corporation, Farmington, CT 06032 (US)
(72) Inventor: FORGETTE, Kyle L., West Hartford, 06107 (US); GWOZDZ, Lukasz, Przeworsk, 37-200 (US)
(74) Representative: Dehns

(57) **Abstract**

An assembly (84) for rotational equipment includes a scoop ring body (88). The scoop ring body (88) extends radially between and to an inner radial side (96) and an outer radial side (98). The scoop ring body (88) extends axially between and to a first axial side (92) and a second axial side (94). The scoop ring body (88) forms at least one scoop (90) including a passage (100), an inner channel (106), and at least one axial passage (150). The passage (100) extends through the scoop ring body (88) from an inlet (110) to an outlet (112). The inner channel (106) extends along the inner radial side (96) between and to an upstream channel end (138) and a downstream channel end (140). The upstream channel end (138) is disposed at the outlet (112). The at least one axial passage (150) extends through the scoop ring body (88) from a passage inlet (152) to a passage outlet (154). The passage inlet (152) is disposed at the inner channel (106) and the passage outlet (154) is disposed at the first axial side (92) or the second axial side (94).

## Description

### BACKGROUND

### 1. Technical Field

This disclosure relates generally to rotational equipment and, more particularly, to lubricant scoop assemblies for rotational equipment.

### 2. Background Information

Rotational equipment such as a gas turbine engine may include a radial scoop for collecting and distributing lubricant injected into a compartment from a nozzle. Various types and configurations of radial scoops are known in the art. While these known radial scoops have various advantages, there is still room in the art for improvement. There is a need in the art, therefore, for an improved radial scoop for rotational equipment.

### SUMMARY

It should be understood that any or all of the features or embodiments described herein can be used or combined in any combination with each and every other feature or embodiment described herein unless expressly noted otherwise.

According to an aspect of the present disclosure, an assembly for rotational equipment includes a scoop ring body. The scoop ring body is rotatable about a rotational axis. The scoop ring body extends radially between and to an inner radial side and an outer radial side. The scoop ring body extends axially between and to a first axial side and a second axial side. The scoop ring body forms at least one scoop. The at least one scoop includes a passage, an inner channel, and at least one axial passage. The passage extends through the scoop ring body from an inlet at the outer radial side to an outlet at the inner radial side. The inner channel extends circumferentially along the inner radial side between and to an upstream channel end and a downstream channel end. The upstream channel end is disposed at the outlet. The at least one axial passage extends through the scoop ring body from a passage inlet to a passage outlet. The passage inlet is disposed at the inner channel, and the passage outlet is disposed at the first axial side or the second axial side.

In any of the aspects or embodiments described above and herein, the at least one scoop may include a plurality of scoops. The plurality of scoops may be arranged in the scoop ring body about the rotational axis as a circumferential array of scoops.

In any of the aspects or embodiments described above and herein, the at least one axial passage may include a plurality of axial passages.

In any of the aspects or embodiments described above and herein, the plurality of axial passages may include a forward subset of the plurality of axial passages and an aft subset of the plurality of axial passages. The passage outlet of each axial passage of the forward subset of the plurality of axial passage may be disposed at the first axial side. The passage outlet of each axial passage of the aft subset of the plurality of axial passages may be disposed at the second axial side.

In any of the aspects or embodiments described above and herein, the forward subset of the plurality of axial passages may be configured to direct fluid through the forward subset of the plurality of axial passages at a first fluid flow rate. The aft subset of the plurality of axial passages may be configured to direct fluid through the aft subset of the plurality of axial passages at a second fluid flow rate. The first fluid flow rate may be different than the second fluid flow rate.

In any of the aspects or embodiments described above and herein, the forward subset of the plurality of axial passages may include a first quantity of the plurality of axial passages. The aft subset of the plurality of axial passages may include a second quantity of the plurality of axial passages. The first quantity may be different than the second quantity.

In any of the aspects or embodiments described above and herein, the at least one scoop may further include opposing axial channel sidewalls of the scoop ring body. The inner channel may axially extend between and to the opposing axial channel sidewalls.

In any of the aspects or embodiments described above and herein, the inner channel may extend radially into the scoop ring body to a radial channel boundary. The radial channel boundary may have a concave shape.

In any of the aspects or embodiments described above and herein, the concave shape may be a V shape including a vertex extending circumferentially along the inner channel.

In any of the aspects or embodiments described above and herein, the at least one scoop may include a flow divider wall formed by the scoop ring body at the inner channel. The flow divider wall may extend circumferentially from the upstream channel end toward the downstream channel end.

In any of the aspects or embodiments described above and herein, the at least one axial passage may include a groove formed by the scoop ring body. The at least one axial passage may be open to the inner radial side.

In any of the aspects or embodiments described above and herein, the at least one scoop may include an outer channel extending circumferentially along the outer radial side between and to an outer upstream channel end and an outer downstream channel end. The outer downstream channel end may be disposed at the inlet.

In any of the aspects or embodiments described above and herein, the at least one scoop may further include outer opposing axial channel sidewalls of the scoop ring body. The outer channel may axially extend between and to the outer opposing axial channel sidewalls.

According to another aspect of the present disclosure, an assembly for rotational equipment includes an engine static structure, a rotatable base structure, a scoop ring, and a lubricant injector. The rotatable base structure is configured to rotate about a rotational axis relative to the engine static structure. The scoop ring is mounted to the rotatable base structure. The scoop ring includes a scoop ring body. The scoop ring body extends axially between and to a first axial side and a second axial side. The scoop ring body forms at least one scoop. The at least one scoop includes a passage, a channel, and at least one axial passage. The passage extends through the scoop ring body from an inlet to an outlet. The channel is disposed at the outlet. The at least one axial passage extends through the scoop ring body from a passage inlet to a passage outlet. The passage inlet is disposed at the channel. The passage outlet is disposed at the first axial side or the second axial side. The lubricant injector is positioned radially outside the scoop ring. The lubricant injector is configured to direct a lubricant stream to the inlet.

In any of the aspects or embodiments described above and herein, the rotatable base structure may include a shaft and a bearing. The bearing may be configured to rotatably support the shaft. The bearing may include an inner race fixedly mounted to the shaft. The scoop ring body may be mounted to and axially adjacent the inner race at the first axial side.

In any of the aspects or embodiments described above and herein, the passage outlet of a first axial passage of the at least one axial passage may be disposed at the first axial side. The scoop ring may be configured to direct a fluid to the bearing through the first axial passage.

In any of the aspects or embodiments described above and herein, the assembly may further include a rotatable body mounted on the shaft. The scoop ring body may be mounted to and axially adjacent the rotatable body at the second axial side. The passage outlet of a second axial passage of the at least one axial passage may be disposed at the second axial side. The scoop ring may be configured to direct the fluid to the rotatable body through the second axial passage.

According to another aspect of the present disclosure, a method for directing lubricant to components of a rotational equipment assembly of a gas turbine engine includes directing a lubricant stream of the lubricant from a lubricant injector toward a scoop ring. The scoop ring includes a scoop ring body. The scoop ring further includes a passage and a plurality of axial passages. The passage and the plurality of axial passages are formed through the scoop ring body. The method further includes rotating the scoop ring such that the scoop ring directs at least some of the lubricant from the lubricant stream into an inlet of the passage, directs at least some of the lubricant from the lubricant stream into the plurality of axial passages from an outlet of the passage, and directs at least some of the lubricant from the lubricant stream through the plurality of axial passages to a first component axially adjacent the scoop ring.

In any of the aspects or embodiments described above and herein, each axial passage of the plurality of axial passages may include a passage outlet. The plurality of axial passages may include a forward subset of the plurality of axial passages and an aft subset of the plurality of axial passages. The passage outlet of each axial passage of the forward subset of the plurality of axial passage may be disposed at a first axial side of the scoop ring axially adjacent the first component. The passage outlet of each axial passage of the aft subset of the plurality of axial passages may be disposed at a second axial side of the scoop ring.

In any of the aspects or embodiments described above and herein, the method may further include rotating the scoop ring to further direct at least some of the lubricant from the lubricant stream through the plurality of axial passages to a second component axially adjacent the second axial side.

The present disclosure, and all its aspects, embodiments and advantages associated therewith will become more readily apparent in view of the detailed description provided below, including the accompanying drawings.

### BRIEF DESCRIPTION OF THE DRAWINGS

FIG. 1 illustrates a schematic cutaway of a gas turbine engine for an aircraft propulsion system, in accordance with one or more embodiments of the present disclosure.
FIG. 2 illustrates a cutaway, side view of an assembly for the gas turbine engine including a scoop ring, in accordance with one or more embodiments of the present disclosure.
FIG. 3 illustrates a cutaway view of a portion of the scoop ring of FIG. 2, in accordance with one or more embodiments of the present disclosure.
FIG. 4 illustrates a perspective view of the scoop ring of FIG. 2, in accordance with one or more embodiments of the present disclosure.
FIG. 5 illustrates a perspective view of a portion of the scoop ring of FIG. 5, in accordance with one or more embodiments of the present disclosure.
FIG. 6 illustrates a view of a portion of another scoop ring, in accordance with one or more embodiments of the present disclosure.
FIG. 7 illustrates a view of a portion of another scoop ring, in accordance with one or more embodiments of the present disclosure.

### DETAILED DESCRIPTION

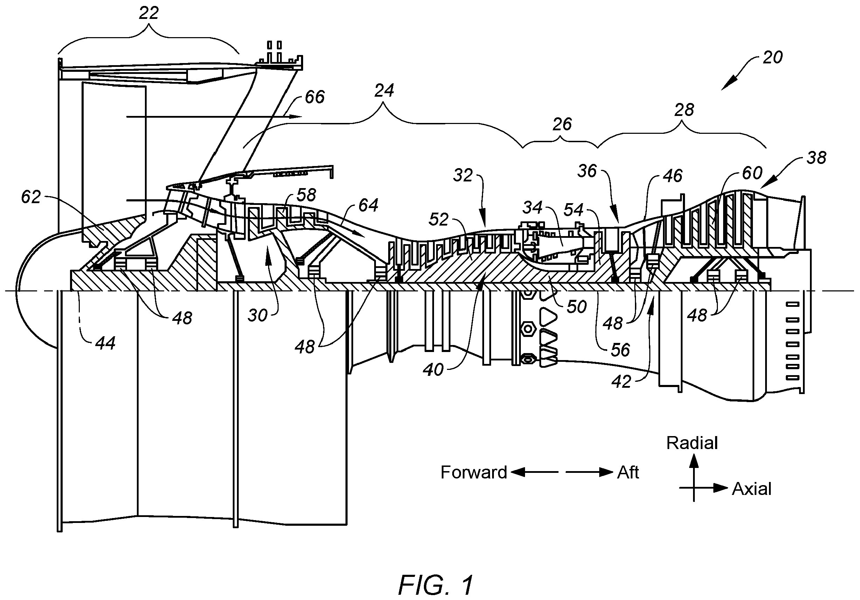

FIG. 1 schematically illustrates a gas turbine engine 20. The gas turbine engine 20 of FIG. 1 is a multi-spool turbofan gas turbine engine for an aircraft propulsion system. However, while the following description and accompanying drawings may refer to the turbofan gas turbine engine of FIG. 1 as an example, it should be understood that aspects of the present disclosure may be equally applicable to other types of gas turbine engines including, but not limited to, a turboshaft gas turbine engine, a turboprop gas turbine engine, a turbojet gas turbine engine, a propfan gas turbine engine, or an open rotor gas turbine engine.

The gas turbine engine 20 of FIG. 1 includes a fan section 22, a compressor section 24, a combustor section 26, and a turbine section 28. For example, the compressor section 24 of FIG. 1 includes a low-pressure compressor (LPC) 30 and a high-pressure compressor (HPC) 32, the combustor section 26 includes a combustor 34 (e.g., an annular combustor), and the turbine section 28 includes a high-pressure turbine (HPT) 36 and a low-pressure turbine (LPT) 38.

The gas turbine engine 20 sections 22, 24, 28 form a first rotational assembly 40 (e.g., a high-pressure spool) and a second rotational assembly 42 (e.g., a low-pressure spool) of the gas turbine engine 20. The first rotational assembly 40 and the second rotational assembly 42 are mounted for rotation about a rotational axis 44 (e.g., an axial centerline of the gas turbine engine 20) relative to the engine static structure 46 of the gas turbine engine 20. The engine static structure 46 may include one or more engine cases, cowlings, bearing assemblies, and/or other non-rotating structures configured to house and/or support components of the gas turbine engine 20 sections 22, 24, 26, 28. For example, the engine static structure 46 may include one or more bearing assemblies 48 for rotationally supporting components of the first rotational assembly 40 and/or the second rotational assembly 42. It should be understood that bearing assemblies, such as the bearing assemblies 48, may be provided at various additional or alternative locations of the gas turbine engine 20.

The first rotational assembly 40 includes a first shaft 50, a bladed first compressor rotor 52 for the high-pressure compressor 32, and a bladed first turbine rotor 54 for the high-pressure turbine 36. The first shaft 50 interconnects the bladed first compressor rotor 52 and the bladed first turbine rotor 54.

The second rotational assembly 42 includes a second shaft 56, a bladed second compressor rotor 58 for the low-pressure compressor 30, and a bladed second turbine rotor 60 for the low-pressure turbine 38. The second shaft 56 interconnects the bladed second compressor rotor 58 and the bladed second turbine rotor 60. The second shaft 56 may additionally be directly or indirectly coupled to a bladed fan rotor 62 for the fan section 22. For example, the second shaft 56 may be coupled to the bladed fan rotor 62 (e.g., an input shaft of the bladed fan rotor 62) by a reduction gear assembly configured to drive the bladed fan rotor 62 at a reduced rotational speed relative to the second shaft 56.

In operation of the gas turbine engine 20 of FIG. 1, ambient air is directed through the fan section 22 and into a core flow path 64 and a bypass flow path 66 by rotation of the bladed fan rotor 62. Airflow along the core flow path 64 is compressed by the low-pressure compressor 30 and the high-pressure compressor 32, mixed and burned with fuel in the combustor 34, and then directed through the high-pressure turbine 36 and the low-pressure turbine 38. The bladed first turbine rotor 54 and the bladed second turbine rotor 60 rotationally drive the first rotational assembly 40 and the second rotational assembly 42, respectively, in response to the combustion gas flow through the high-pressure turbine 36 and the low-pressure turbine 38. The first shaft 50 and the second shaft 56 are concentric and rotate about the rotational axis 44 supported by the bearing assemblies 48. The present disclosure, however, is not limited to concentric configurations of the first shaft 50 and the second shaft 56 and the first shaft 50 and the second shaft 56 may alternatively be configured for rotation about discrete rotational axes.

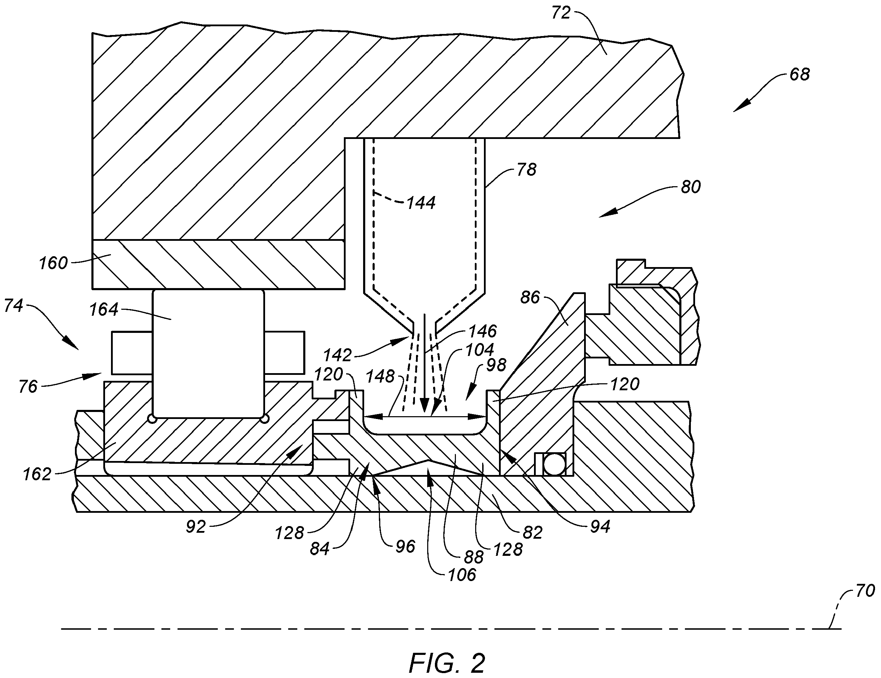

FIG. 2 illustrates an assembly 68 for rotational equipment with a rotational axis 70 (e.g., an axial centerline of the rotational equipment assembly 68). An example of such rotational equipment includes the first rotational assembly 40, the second rotational assembly 42, and/or the bearing assemblies 48 of the gas turbine engine 20 of FIG. 1. However, the rotational equipment assembly 68 is not limited to use with aircraft or gas turbine engine (e.g., the gas turbine engine 20) applications. The rotational equipment assembly 68 may alternatively be configured with rotational equipment such as an industrial gas turbine engine, a wind turbine, a water turbine, or any other apparatus in which fluid may be collected and/or distributed by a rotating scoop.

The rotational equipment assembly 68 of FIG. 2 includes a static structure 72 (e.g., the engine static structure 46 of FIG. 1), a rotatable assembly 74, and at least one bearing 76 (e.g., a bearing of the one or more bearings assemblies 48 of FIG. 1) for rotatably supporting the rotatable assembly 74 relative to the static structure 72. The rotational equipment assembly 68 of FIG. 2 further includes at least one fluid injector 78 such as a lubricant injector, a lubricant nozzle, etc.

The static structure 72 is configured as a stationary part of the rotational equipment. The static structure 72 of FIG. 2, for example, is configured to at least partially form an internal bearing compartment 80 for housing the at least one bearing 76. The static structure 72 may be formed by a case (e.g., an engine case), a frame (e.g., a mid-turbine frame), or other fixed structural body of the associated rotational equipment.

The rotatable assembly 74 of FIG. 2 includes a rotatable base structure 82 and a scoop ring 84. The rotatable subassembly 74 may include one or more additional rotatable bodies. For example, the rotatable assembly 74 includes a rotatable body 86 configured as a seal plate. The rotatable assembly 74 and its components 82, 84, 86 are each configured to rotate about a common rotational axis which, in the embodiment of FIG. 2, is the rotational axis 70.

The rotatable base structure 82 of FIG. 2 is configured as a tubular shaft. However, in other embodiments, the rotatable base structure 82 may be configured as another component (e.g., a sleeve) mounted to and rotatable with a shaft of the rotational equipment, or any other rotor within the rotational equipment. The rotatable base structure 82 of FIG. 2 extends axially along the rotational axis 70 through (or partially into or within) the static structure 72. The static structure 72 of FIG. 2 may, therefore, extend circumferentially about (e.g., completely around) the rotational axis 70 and the rotatable assembly 74.

Referring to FIGS. 2-5, the scoop ring 84 includes a scoop ring body 88 forming one or more scoops 90 (e.g., radial scoops). The scoop ring body 88 is configured as a tubular body with an inner bore configured to receive the rotatable base structure 82. The scoop ring body 88 extends axially along the rotational axis 70 between and to a first axial end 92 of the scoop ring body 88 and a second axial end 94 of the scoop ring body 88. The scoop ring body 88 extends radially between and to an inner radial side 96 of the scoop ring body 88 and an outer radial side 98 of the scoop ring body 88. The scoop ring body 88 extends circumferentially about (e.g., completely around) the rotational axis 70. The scoop ring body 88 may be configured as an intermediate element for locating two other axially adjoining elements (e.g., the bearing 76 and the rotatable body 86). The scoop ring body 88, for example, may also be configured as a shaft spacer, a runner, a sleeve, etc.

Each scoop 90 includes a passage 100 (e.g., a lubricant passage) and an edge 102 formed by the scoop ring body 88. Each scoop 90 may additionally include an outer channel 104 (e.g., an inlet/capture channel) and/or an inner channel 106 (e.g., an outlet/supply channel) formed by the scoop ring body 88.

The passage 100 extends through the scoop ring body 88 from an inlet 110 of the passage 100 to an outlet 112 of the passage 100. The inlet 110 is disposed at (e.g., on, adjacent, or proximate) the outer radial side 98. The outlet 112 is disposed at (e.g., on, adjacent, or proximate) the inner radial side 96. The passage 100 extends longitudinally along a longitudinal passage centerline 114 from the inlet 110 to the outlet 112. The longitudinal passage centerline 114 may have a radial component (e.g., a non-zero radial component) and a circumferential component (e.g., a non-zero circumferential component). The longitudinal passage centerline 114 and, thus, the passage 100 may thereby extend obliquely (e.g., diagonally) through the scoop ring body 88. The longitudinal passage centerline 114 may lie on a reference plane, which reference plane may be perpendicular to the rotational axis 70. The longitudinal passage centerline 114 may extend in a circumferential direction, from the inlet 110 to the outlet 112, opposite to a direction of rotation of the rotatable assembly 74. However, the present disclosure is not limited to the longitudinal passage centerline 114 extending a circumferential direction opposite to a direction of rotation of the rotatable assembly 74.

The edge 102 (e.g., a cutting edge) is disposed at (e.g., on, adjacent, or proximate) the inlet 110. For example, the edge 102 may be formed by an intersection of an outer surface 116 and an inner surface 118 of the scoop ring body 88. The outer surface 116 may be disposed along the outer radial side 98. The inner surface 118 may form a portion of the passage 100.

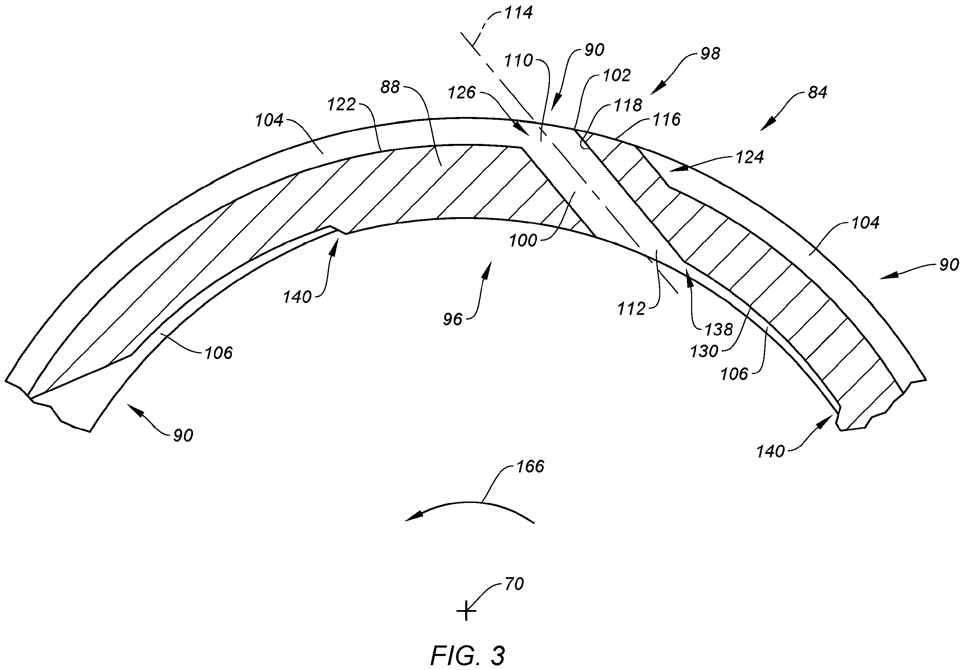

The outer channel 104 is disposed at (e.g., on, adjacent, or proximate) the passage 100 (e.g., the inlet 110) on the outer radial side 98. For example, the outer channel 104 may be disposed circumferentially upstream of the passage 100 with respect to a direction of rotation of the rotatable assembly 74. The outer channel 104 may extend axially between opposing axial channel sidewalls 120 formed by the scoop ring body 88. The outer channel 104 may extend radially (e.g., in an inward direction toward the rotational axis 70) partially into the scoop ring body 88 to a radial channel boundary 122. The outer channel 104 may extend circumferentially within the scoop ring body 88 from an upstream channel end 124 of the outer channel 104 to a downstream channel end 126 of the outer channel 104. The outer channel 104 is fluidly coupled with and upstream of the passage 100. For example, the downstream channel end 126 of FIG. 3 is disposed at (e.g., on, adjacent, or proximate) the inlet 110. The outer channel 104 may thereby extend circumferentially within the scoop ring body 88 to the passage 100. The present disclosure, however, is not limited to such an exemplary direct fluid coupling.

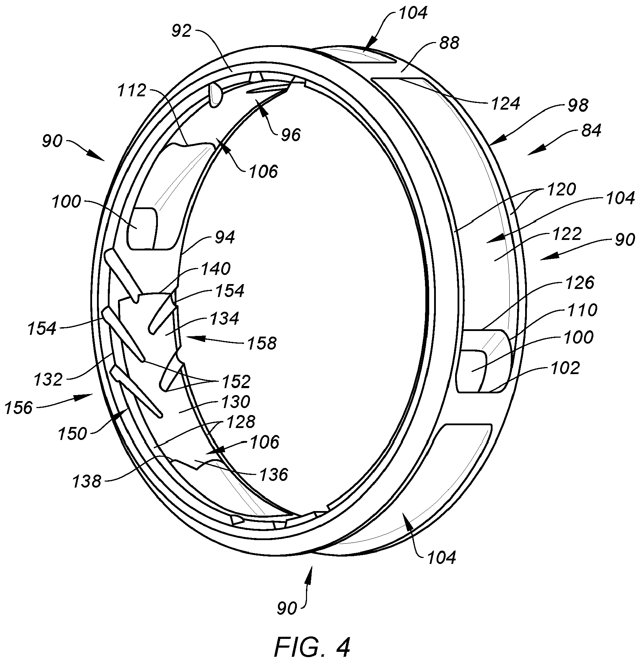

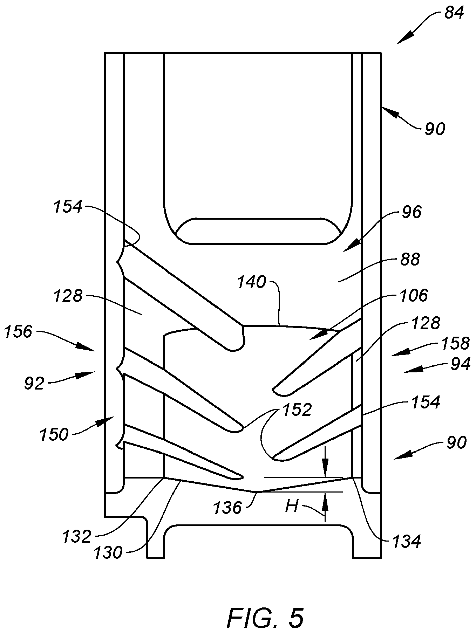

The inner channel 106 is disposed at (e.g., on, adjacent, or proximate) the passage 100 (e.g., the outlet 112) on the inner radial side 96. For example, the inner channel 106 may be disposed circumferentially downstream of the passage 100 with respect to a direction of rotation of the rotatable assembly 74. The inner channel 106 may extend axially between opposing axial channel sidewalls 128 formed by the scoop ring body 88. For example, the opposing axial channel sidewalls 128 may extend circumferentially along all or a portion of a circumferential extent of the inner channel 106. The inner channel 106 may extend radially (e.g., in an outward direction away from the rotational axis 70) partially into the scoop ring body 88 to a radial channel boundary 130. The radial channel boundary 130 may extend between and to the opposing axial channel sidewalls 128. The radial channel boundary 130 may have a generally concave shape. For example, the radial channel boundary 130 of FIGS. 4 and 5 has a "V" shape with the radial channel boundary 130 including a first axial side 132, a second axial side 134, and a vertex 136. The first axial side 132 and the second axial side 134 are disposed at opposing axial sides of the inner channel 106 (e.g., the radial channel boundary 130). For example, the first axial side 132 and the second axial side 134 may be disposed at (e.g., on, adjacent, or proximate) the opposing axial channel sidewalls 128. The vertex 136 is disposed between (e.g., axially between) the first axial side 132 and the second axial side 134. The vertex 136 may extend circumferentially along the radial channel boundary 130. The vertex 136 is disposed outward (e.g., radially outward) of the first axial side 132 and the second axial side 134. For example, the vertex 136 may be disposed radially outward of the first axial side 132 and the second axial side 134 by a plenum height H. The inner channel 106 may extend circumferentially within the scoop ring body 88 from an upstream channel end 138 of the inner channel 106 to a downstream channel end 140 of the inner channel 106. The inner channel 106 is fluidly coupled with and downstream of the passage 100. For example, the upstream channel end 138 of FIG. 3 is disposed at (e.g., on, adjacent, or proximate) the outlet 112. The inner channel 106 may thereby extend circumferentially within the scoop ring body 88 from the passage 100. The present disclosure, however, is not limited to such an exemplary direct fluid coupling.

Each of the scoops 90 of the scoop ring 84 may be substantially identical to each other scoop 90 of the scoop ring 84. The scoops 90 of FIG. 4 are arranged on the scoop ring body 88 about the rotational axis 70 as a circumferential array of the scoops 90. The circumferential array of scoops 90 of FIG. 4 includes four scoops 90, however, the present disclosure is not limited to any particular number of scoops 90 for the circumferential array for the scoop ring 84 or its circumferential array.

The fluid injector 78 is arranged radially outside of the rotatable assembly 74. The fluid injector 78 is configured to inject fluid (e.g., lubricant) into the bearing compartment 80 to provide the fluid to one or more other components of the rotational equipment such as, but not limited to, one or more or each of the rotational equipment assembly 68 components 74, 76. The fluid injector 78 includes one or more nozzle orifices 142 (one visible in FIG. 2). The nozzle orifices 142 may be fluidly coupled with and, thus, supplied with the fluid (e.g., lubricant) from a common internal passage 144 within the fluid injector 78. The nozzle orifices 142 are configured to direct a fluid stream (e.g., a lubricant stream) out of the fluid injector 78, into the bearing compartment 80 (or another space) and to the scoop ring 84. For example, the fluid injector 78 is configured to direct a fluid stream 146 to the scoop ring 84. The fluid stream 146 may have a generally conical shape which expands in diameter in a direction from the fluid injector 78 to the scoop ring 84, as illustrated in FIG. 2. The fluid injector 78 directs the fluid stream 146 to the outer radial side 98 and, in particular, to an axial portion of the scoop ring body 88, which axial portion is referred to herein as a scoop window 148. The scoop window 148 refers to a target axial portion of the scoop ring body 88 for which the fluid stream 146 directed onto the scoop ring body 88 will flow through the passage 100 of each of the scoops 90 and subsequently be distributed by the scoop ring 84 to surrounding rotational equipment assembly 68 components 74, 76. For example, the scoop window 148 may be defined as an axial portion of the scoop ring body 88 between the opposing axial channel sidewalls 120 at (e.g., on, adjacent, or proximate) the outer radial side 98. The nozzle orifices 142 may be further configured to direct a fluid stream to one or more other components within the bearing compartment 80 such as, but not limited to, the bearing 76, the rotatable base structure 82, and/or the rotatable body 86. The fluid stream 146 of FIG. 2 is illustrated as flowing in a direction perpendicular to or substantially perpendicular to the rotational axis 70 (e.g., in a radially inward direction). However, a direction of the fluid stream 146 may additionally have axial and/or circumferential elements as well. For example, the fluid injector 78 may be configured to direct the fluid stream 146 in any of a radial, an axial, and/or a circumferential direction relative to the rotational axis 70.

During operation of the gas turbine engine 20, large axial deviations of axial positions of the fluid injector 78 and the scoop ring 84 may occur (e.g., relative to a non-operating condition of the gas turbine engine 20). In other words, relative axial positions of the fluid injector 78 and the scoop ring 84 may vary depending, for example, on an operating condition of the gas turbine engine 20. Axial deviations of the fluid injector 78 and the scoop ring 84 may occur, at least in part, due to changes in temperature within the bearing compartment 80 (e.g., due to thermal expansion and contraction of rotational equipment assembly 68 components). For example, in at least some conventional rotational equipment assemblies of which we are aware, axial deviations of a fluid injector and a radial scoop ring may exceed fifty percent of an axial length of the scoop window for the radial scoop ring. In some cases, this axial deviation may cause or increase the likelihood of fluid jet (e.g., oil jet) mistargeting, whereby some or all of the fluid jet (e.g., a conical fluid jet) directed toward the radial scoop ring misses the scoop window for the radial scoop ring, thereby reducing radial scoop ring efficiency. Moreover, in at least some conventional rotational equipment assemblies of which we are aware, the available scoop window for the radial scoop ring may be limited by the presence of a second scoop configured as an axial scoop ring. For example, the conventional rotational equipment assemblies may include a radial scoop ring and an axial scoop ring positioned axially adjacent the radial scoop ring. This axial scoop may receive fluid (e.g., a fluid jet) from the fluid injector and direct the received fluid in an axial direction to one or more other components of the conventional rotational equipment assemblies. Because axial space of the conventional rotational equipment assemblies (e.g., within a bearing compartment) may be limited, the presence of the axial scoop ring limits the available axial span of the radial scoop ring and, therefore, limits the scoop window for the radial scoop ring leading to fluid jet mistargeting or an increased risk of fluid jet mistargeting for the radial scoop ring.

The present disclosure scoop ring 84 (e.g., the scoop ring body 88) forms a plurality of axial passages 150 for each scoop 90. The axial passages 150 are formed by the scoop ring body 88 of FIGS. 4 and 5 at (e.g., on, adjacent, or proximate) the inner radial side 96. Each of the axial passages 150 extends between and to a passage inlet 152 and a passage outlet 154. Each of the axial passages 150 of FIGS. 4 and 5 are open to the inner radial side 96 between the passage inlet 152 and the passage outlet 154. For example, the axial passages 150 may be configured as grooves extending from the passages inlet 152 to the passage outlet 154 along the inner radial side 96. However, the axial passages 150 may alternatively be formed within (e.g., completely surrounded by) the scoop ring body 88 between the passage inlet 152 and the passage outlet 154. Each of the axial passages 150 extends in a passage direction from the passage inlet 152 to the passage outlet 154. The passage direction includes an axial component such that the passage inlet 152 is axially spaced from the passage outlet 154. The passage direction may additionally include a radial component and/or a circumferential component. The axial passages 150 of FIGS. 4 and 5, for example, extend radially outward along the passage direction from the passage inlet 152 to the passage outlet 154. The axial passages 150 of FIGS. 4 and 5, for example, also extend circumferentially along the passage direction from the passage inlet 152 to the passage outlet 154. In particular, the axial passages 150 of FIGS. 4 and 5 extend circumferentially in a downstream direction with respect to a direction of rotation of the rotatable assembly 74.

The axial passages 150 may include a forward subset 156 of the axial passages 150. The passage inlet 152 of the axial passages 150 of the forward subset 156 may be disposed at (e.g., on, adjacent, or proximate) the inner channel 106 (e.g., the radial channel boundary 130). For example, the passage inlet 152 of the axial passages 150 of the forward subset 156 may be disposed at the radial channel boundary 130 forward of the vertex 136. The passage outlet 154 of the axial passages 150 of the forward subset 156 may be disposed at (e.g., on, adjacent, or proximate) the first axial end 92 (e.g., an axially forward end of the scoop ring 84). For example, the passage outlet 154 of the axial passages 150 of the forward subset 156 may be disposed on one of the opposing axial channel sidewalls 128 at the first axial end 92. The axial passages 150 of the forward subset 156 may be circumferentially distributed along the inner channel 106. The forward subset 156 of FIGS. 4 and 5 includes three axial passages 150, however, the present disclosure is not limited to any particular number of axial passages 150 of the forward subset 156.

The axial passages 150 may additionally or alternatively include an aft subset 158 of the plurality of passages 150. The passage inlet 152 of the axial passages 150 of the aft subset 158 may be disposed at (e.g., on, adjacent, or proximate) the inner channel 106 (e.g., the radial channel boundary 130). For example, the passage inlet 152 of the axial passages 150 of the aft subset 158 may be disposed at the radial channel boundary 130 aft of the vertex 136. The passage outlet 154 of the axial passages 150 of the aft subset 158 may be disposed at (e.g., on, adjacent, or proximate) the second axial end 94 (e.g., an axially aft end of the scoop ring 84). For example, the passage outlet 154 of the axial passages 150 of the aft subset 158 may be disposed on one of the opposing axial channel sidewalls 128 at the second axial end 94. The axial passages 150 of the aft subset 158 may be circumferentially distributed along the inner channel 106. The aft subset 158 of FIGS. 4 and 5 includes two axial passages 150, however, the present disclosure is not limited to any particular number of axial passages 150 of the aft subset 158. The axial passages 150 of the aft subset 158 may be circumferentially staggered with the axial passages 150 of the forward subset 158 as shown, for example, in FIGS. 4 and 5, which staggered configuration may provide more even fluid flow from the outlet 112 toward the downstream channel end 126.

The forward subset 156 and the aft subset 158 may be configured to direct more or less fluid to one axial side of the scoop ring 84 (e.g., through the first axial end 92) relative to the other axial side of the scoop ring 84 (e.g., through the second axial end 94). For example, a volume, size, quantity, passage direction, and/or other characteristic of the axial passages 150 of the forward subset 156 and the aft subset 158 may be selected to direct greater than fifty percent of a total fluid flow of the axial passages 150 through one of the forward subset 156 or the aft subset 158 and less than fifty percent of the total fluid flow of the axial passages 150 through the other of the forward subset 156 or the aft subset 158. The forward subset 156 and the aft subset 158 of FIGS. 4 and 5 are configured to direct greater than fifty percent of the total fluid flow through the forward subset 156 and less than fifty percent of the fluid flow through the aft subset 158. However, the present disclosure is not limited to this particular configuration of FIGS. 4 and 5.

The bearing 76 may be configured as a roller element bearing. The bearing 76 of FIG. 2, for example, includes an annular outer race 160, an annular inner race 162, and a plurality of bearing elements 164 (e.g., cylindrical or spherical elements). The outer race 160 circumscribes the inner race 162 and the bearing elements 164. The outer race 160 is mounted to the static structure 72. The inner race 162 circumscribes and is mounted to the rotatable base structure 82. The bearing elements 164 are arranged in an annular array about the rotational axis 70, which array is radially between and engaged with (e.g., contacts) the outer race 160 and the inner race 162. The present disclosure, however, is not limited to the foregoing exemplary bearing configuration. For example, in some other embodiments, the bearing 76 may alternatively be configured as a journal bearing or any other type of bearing which may be used in the rotational equipment.

The rotational equipment assembly 68 operates to direct fluid (e.g., lubricant) to components of the rotatable assembly 74, for example, to provide lubrication and/or cooling for the components. The fluid injector 78 directs the fluid stream 146 (e.g., a lubricant stream) of the fluid toward the scoop ring 84. As the scoop ring 84 rotates with the rotatable base structure 82 (e.g., in a rotational direction 166), the edge 102 of each scoop 90 passes through the fluid stream 146. The edge 102 directs at least some of the fluid of the fluid stream 146 into and through the passage 100. Rotation of the scoop ring 84 causes the scoop ring 84 to direct the fluid through the passage 100 of each scoop 90 to the rotating base structure 82. Rotation of the scoop ring 84 additionally causes the scoop ring 84 to direct the fluid through the axial passages 150 (e.g., the forward subset 156 and/or the aft subset 158) to one or more additional components of the rotational equipment assembly 68 such as, but not limited to, the bearing 76, the rotatable base structure 82, and/or the rotatable body 86.

The radial scoop ring 84 of the present disclosure obviates the use of a discrete axial scoop ring to distribute fluid (e.g., lubricant) to axially adjacent components of the rotational equipment assembly 68. Accordingly, the axial span of the radial scoop ring 84 may be increased to increase the axial length of the scoop window 148, thereby preventing or reducing the likelihood of fluid jet (e.g., oil jet) mistargeting by the fluid injector 78 and increasing the efficiency of the radial scoop ring 84. The concave (e.g., V-shaped) radial channel boundary 130 facilitates oil along the inner channel 106 (e.g., from the upstream channel end 138 to the downstream channel end 140) such that sufficient fluid reaches and flows through the axial passages 150 at (e.g., on, adjacent, or proximate) the downstream channel end 140.

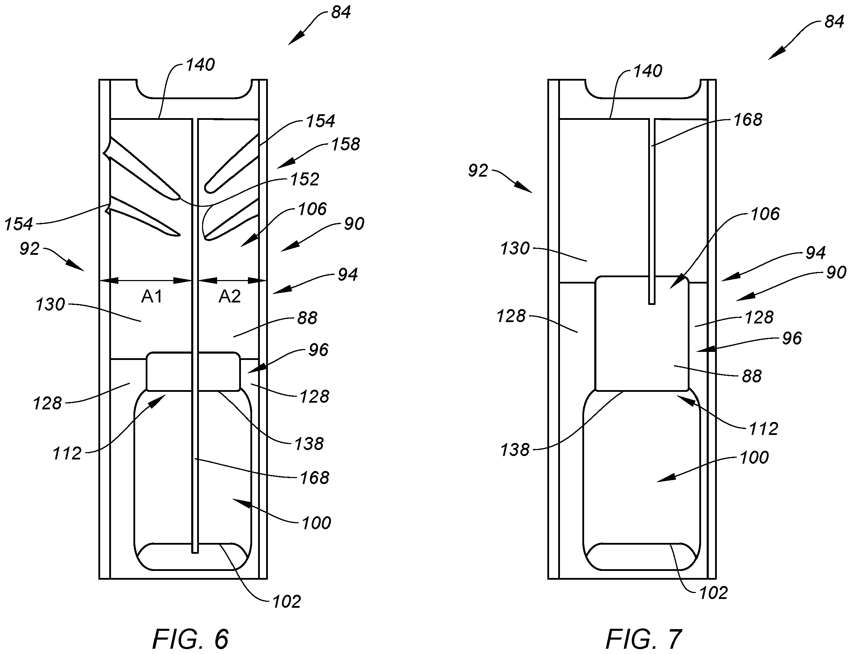

Referring to FIGS. 6 and 7, in some embodiments, each scoop 90 may include a flow divider wall 168 formed by the scoop ring body 88 at the inner channel 106. As shown in FIG. 6, each scoop 90 may include the flow divider wall 168 and the plurality of axial passages 150. As shown in FIG. 7, each scoop 90 may alternatively include the flow divider wall 168 without the axial passages 150. The flow divider wall 168 may extend from (e.g., radially inward from) the radial channel boundary 130. In embodiments of the scoop 90 including the flow divider wall 168, the radial channel boundary 130 may have a generally flat shape, for example, in contrast to the generally concave shape of the radial channel boundary 130 of FIG. 5. The flow divider wall 168 may extend circumferentially along the scoop 90 all or a portion of a circumferential extent of the scoop 90. For example, the flow divider wall 168 of FIG. 6 extends circumferentially from the edge 102 to the downstream channel end 140. The flow divider wall 168 of FIG. 7 extends from a circumferentially intermediate portion of the inner channel 106 to the downstream channel end 140. The present disclosure, however, is not limited to the aforementioned exemplary embodiments of the flow divider wall 168 or combinations of the flow divider wall 168 and the axial passages 150 illustrated in FIGS. 6 and 7. The flow divider wall 168 may circumferentially extend all or a portion of a circumferential distance between the upstream channel end 138 and the downstream channel end 140. The flow divider wall 168 may be positioned axially between and spaced from the first axial side 132 and the second axial side 134. For example, the flow divider wall 168 may be disposed axially between the axial passages 150 of the forward subset 156 and the axial passages 150 of the aft subset 158. As shown in FIG. 6, the flow divider wall 168 may be axially spaced from the first axial end 92 by an axial distance A1 and the flow divider wall 168 may be axially spaced from the second axial end 94 by an axial distance A2. The axial distance A1 and the axial distance A2 may be selected to control an amount of a total fluid flow directed from the scoop 90 at the first axial end 92 and the second axial end 94.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An assembly (84) for rotational equipment, the assembly (84) comprising:
a scoop ring body (88) rotatable about a rotational axis (70), the scoop ring body (88) extends radially between and to an inner radial side (96) and an outer radial side (98), the scoop ring body (88) extends axially between and to a first axial side (92) and a second axial side (94), the scoop ring body (88) forms at least one scoop (90), and the at least one scoop (90) includes:
a passage (100) extending through the scoop ring body (88) from an inlet (110) at the outer radial side (98) to an outlet (112) at the inner radial side (96);
an inner channel (106) extending circumferentially along the inner radial side (96) between and to an upstream channel end (138) and a downstream channel end (140), and the upstream channel end (138) is disposed at the outlet (112); and
at least one axial passage (150) extending through the scoop ring body (88) from a passage inlet (152) to a passage outlet (154), the passage inlet (152) is disposed at the inner channel (106), and the passage outlet (154) is disposed at the first axial side (92) or the second axial side (94).

2. The assembly of claim 1, wherein the at least one scoop (90) includes a plurality of scoops (90), and the plurality of scoops (90) are arranged in the scoop ring body (88) about the rotational axis (70) as a circumferential array of scoops (90).

3. The assembly of claim 1 or 2, wherein the at least one axial passage (150) includes a plurality of axial passages (150).

4. The assembly of claim 3, wherein the plurality of axial passages (150) includes a forward subset (156) of the plurality of axial passages (150) and an aft subset (158) of the plurality of axial passages (150), the passage outlet (154) of each axial passage (150) of the forward subset (156) of the plurality of axial passages (150) is disposed at the first axial side (92), and the passage outlet (154) of each axial passage (150) of the aft subset (158) of the plurality of axial passages (150) is disposed at the second axial side (94).

5. The assembly of claim 4, wherein the forward subset (156) of the plurality of axial passages (150) is configured to direct fluid through the forward subset (156) of the plurality of axial passages (150) at a first fluid flow rate, the aft subset (158) of the plurality of axial passages (150) is configured to direct fluid through the aft subset (158) of the plurality of axial passages (150) at a second fluid flow rate, and the first fluid flow rate is different than the second fluid flow rate.

6. The assembly of claim 4 or 5, wherein the forward subset (156) of the plurality of axial passages (150) includes a first quantity of the plurality of axial passages (150), the aft subset (158) of the plurality of axial passages (150) includes a second quantity of the plurality of axial passages (150), and the first quantity is different than the second quantity.

7. The assembly of any preceding claim, wherein the at least one scoop (90) further includes opposing axial channel sidewalls (128) of the scoop ring body (88), and the inner channel (106) axially extends between and to the opposing axial channel sidewalls (128).

8. The assembly of any preceding claim, wherein the inner channel (106) extends radially into the scoop ring body (88) to a radial channel boundary (130), and the radial channel boundary (130) has a concave shape, optionally wherein the concave shape is a V shape including a vertex (136) extending circumferentially along the inner channel (106).

9. The assembly of any preceding claim, wherein the at least one scoop (90) includes a flow divider wall (168) formed by the scoop ring body (88) at the inner channel (106), the flow divider wall (168) extending circumferentially from the upstream channel end (138) toward the downstream channel end (140).

10. The assembly of any preceding claim, wherein the at least one axial passage (150) includes a groove formed by the scoop ring body (88), and the at least one axial passage (150) is open to the inner radial side (96).

11. The assembly of any preceding claim, wherein the at least one scoop (90) includes an outer channel (104) extending circumferentially along the outer radial side (98) between and to an outer upstream channel end (124) and an outer downstream channel end (126), and the outer downstream channel end (126) is disposed at the inlet (110), optionally wherein the at least one scoop (90) further includes outer opposing axial channel sidewalls (120) of the scoop ring body (88), and the outer channel (104) axially extends between and to the outer opposing axial channel sidewalls (120).

12. A rotational equipment assembly for rotational equipment, the rotational equipment assembly comprising:
an engine static structure (46; 72);
a rotatable base structure (82) configured to rotate about a rotational axis (70) relative to the engine static structure (46); and
the assembly (84) of any preceding claim mounted to the rotatable base structure (82), wherein the at least one scoop (90) includes a lubricant injector (78) positioned radially outside the assembly (84), the lubricant injector (78) configured to direct a lubricant stream (146) to the inlet (110).

13. The rotational equipment assembly of claim 12, wherein the rotatable base structure (82) includes a shaft (50; 56) and a bearing (76), the bearing (76) is configured to rotatably support the shaft (50; 56), the bearing (76) includes an inner race (162) fixedly mounted to the shaft (50; 56), and the scoop ring body (88) is mounted to and axially adjacent the inner race (162) at the first axial side (92),
optionally wherein the passage outlet (154) of a first axial passage (150) of the at least one axial passage (150) is disposed at the first axial side (92), and the assembly (84) is configured to direct a fluid to the bearing (76) through the first axial passage (150),
further optionally wherein the rotational equipment assembly comprises a rotatable body (86) mounted on the shaft (50; 56), the scoop ring body (88) is mounted to and axially adjacent the rotatable body (86) at the second axial side (94), wherein the passage outlet (154) of a second axial passage (150) of the at least one axial passage (150) is disposed at the second axial side (94), and the assembly (84) is configured to direct the fluid to the rotatable body (86) through the second axial passage (150).

14. A method for directing lubricant to components of a rotational equipment assembly of a gas turbine engine (20), the method comprising:
directing a lubricant stream (146) of the lubricant from a lubricant injector (78) toward a scoop ring (84), the scoop ring (84) including a scoop ring body (88), the scoop ring (84) further including a passage (100) and a plurality of axial passages (150), the passage (100) and the plurality of axial passages (150) formed through the scoop ring body (88); and
rotating the scoop ring (84) such that the scoop ring (84) directs at least some of the lubricant from the lubricant stream (146) into an inlet (110) of the passage (100, directs at least some of the lubricant from the lubricant stream (146) into the plurality of axial passages (150) from an outlet (112) of the passage (100), and directs at least some of the lubricant from the lubricant stream (146) through the plurality of axial passages (150) to a first component axially adjacent the scoop ring (84).

15. The method of claim 14, wherein each axial passage (150) of the plurality of axial passages (150) includes a passage outlet (154), the plurality of axial passages (150) includes a forward subset (156) of the plurality of axial passages (150) and an aft subset (158) of the plurality of axial passages (150), the passage outlet (154) of each axial passage (150) of the forward subset (156) of the plurality of axial passages (150) is disposed at a first axial side (92) of the scoop ring (84) axially adjacent the first component, and the passage outlet (154) of each axial passage (150) of the aft subset (156) of the plurality of axial passages (150) is disposed at a second axial side (94) of the scoop ring (84),
optionally wherein rotating the scoop ring (84) further directs at least some of the lubricant from the lubricant stream (146) through the plurality of axial passages (150) to a second component axially adjacent the second axial side (94).
